**Europäisches Patentamt**

**European Patent Office**

**Office européen des brevets**

(19)

(11) Veröffentlichungsnummer : **0 099 036**
**B1**

(12) **EUROPÄISCHE PATENTSCHRIFT**

(45) Veröffentlichungstag der Patentschrift :
09.10.85

(51) Int. Cl.⁴ : **H 02 B 11/04**

(21) Anmeldenummer : **83106451.4**

(22) Anmeldetag : **01.07.83**

(54) **Gekapseltes elektrisches Schaltfeld.**

(30) Priorität : 13.07.82 DE 8220008 U

(43) Veröffentlichungstag der Anmeldung :
25.01.84 Patentblatt 84/04

(45) Bekanntmachung des Hinweises auf die Patenterteilung : 09.10.85 Patentblatt 85/41

(84) Benannte Vertragsstaaten :
**AT BE DE GB IT NL**

(56) Entgegenhaltungen :
**GB-A-  807 952**
**US-A- 1 699 753**
**US-A- 4 086 452**
**PATENTS ABSTRACTS OF JAPAN, Band 2, Nr. 51, 12.**
**April 1978, Seite 825E78**

(73) Patentinhaber : **Siemens Aktiengesellschaft**
**Berlin und München Wittelsbacherplatz 2**
**D-8000 München 2 (DE)**

(72) Erfinder : **Lehr, Manfred**
**Rodensteinstrasse 1**
**D-6054 Rodgau (DE)**

## Beschreibung

Die Erfindung bezieht sich auf ein gekapseltes elektrisches Schaltfeld nach dem Oberbegriff des Anspruches 1.

Es ist bereits ein elektrisches Schaltfeld der im Oberbegriff des Anspruches 1 genannten Art bekannt. Die Deckplatten sind hierbei nebeneinander angeordnet und zur Freigabe der Öffnungen in Richtung der Feldseitenwände auseinanderbewegbar. Das Hebelgetriebe nimmt verhältnismäßig viel Raum ein und erstreckt sich nahezu über die ganze Feldbreite (US-A-16 99 753).

Aufgabe der Erfindung ist es, das elektrische Schaltfeld nach dem oberbegriff des Anspruches 1 so auszubilden, daß die Deckplatten in vertikaler Richtung auseinanderbewegbar sind und das Hebelgetriebe besonders raumsparend ausgebildet und angeordnet ist.

Die gestellte Aufgabe wird durch die im kennzeichnenden Teil des Anspruches 1 genannte Ausbildung gelöst.

Zweckmäßige Aus- und Weiterbildungen des Erfindungsgegenstandes sind in den Ansprüchen 2 und 3 angegeben.

Die gefundene Lösung hat den Vorteil, daß die Deckplatten bei der Fahrbewegung des Schalterwagens zwangsweise angehoben beziehungsweise gesenkt werden.

Bei der Ausbildung nach Anspruch 2 ergibt sich der Vorteil, daß die Deckplatten durch einen Schub in Richtung ihrer Bewegungsbahn nicht aus ihren Endlagen bewegt werden können.

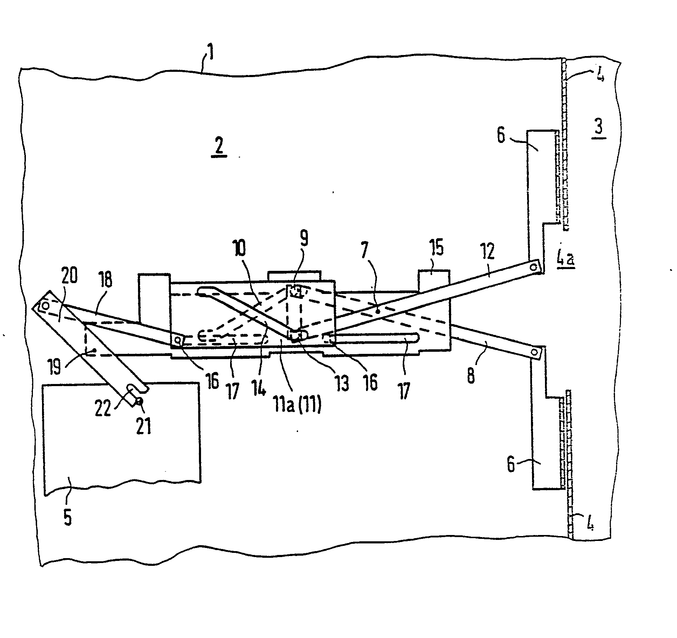

Ein Ausführungsbeispiel der Erfindung ist in der Zeichnung rein schematisch dargestellt, die eine Ansicht der Innenseite einer Seitenwand eines gekapselten elektrischen Schaltfeldes zeigt.

In der Zeichnung ist mit 1 eine Seitenwand einer Kapselung eines elektrischen Schaltfeldes bezeichnet.

Das Bezugszeichen 2 gilt für einen Leistungsschalterraum und das Bezugszeichen 3 für einen Sammelschienenraum oder einen Kabelanschlußraum des elektrischen Schaltfeldes.

Eine den Leistungsschalterraum 2 vom Sammelschienen- oder Kabelanschlußraum 3 trennende Schottwand ist mit 4 bezeichnet.

Die Schottwand 4 weist für den Durchgriff von nicht dargestellten Kontaktarmen eines im Leistungsschalterraum 2 aus einer Trennstellung in eine Betriebsstellung fahrbaren Schalterwagens 5 Öffnungen 4a auf, von denen eine in der Zeichnung ersichtlich ist.

Vor der Schottwand 4 sind zwei Deckplatten 6 angeordnet, mit denen die Öffnungen 4a in der Trennstellung des Schalterwagens 5 verschlossen sind.

Die Deckplatten 6 liegen in ihrer Verschlußlage aneinander (nicht dargestellt) und sind durch die Bewegung des Schalterwagens 5 aus der Trennstellung in die Betriebsstellung, unter Freigabe der Öffnungen 4a, auseinanderbewegbar. Sie nehmen in der Betriebsstellung des Schalterwagens 5 die in der Zeichnung dargestellte Stellung ein.

Zur Übertragung der Bewegung des Schalterwagens 5 auf die Deckplatten 6 ist ein nachstehend näher erläutertes Hebelgetriebe vorgesehen, das einen an der Innenseite der Seitenwand 1 angeordneten und um einen ortsfesten Drehpunkt 7 schwenkbaren Hebel 8 aufweist.

Der Hebel 8 ist zweiarmig. Einer der Arme ist an einer der Deckplatten 6 angelenkt. der andere Arm des Hebels 8 greift mit einer Rolle 9 in einen geneigten Schlitz 10 einer Platte 11 eines Plattenpaares 11, 11a ein.

Das zuvor schon genannte Hebelgetriebe ist ein aus dem Hebel 8 und einem weiteren Hebel 12 bestehendes, zum gegenläufigen Heben und Senken der Deckplatten 6 ausgebildetes Scherengetriebe.

In gleicher Weise wie der Hebel 8, ist auch der weitere Hebel 12 angeordnet. Er ist einerseits an der freien Deckplatte 6 angelenkt und greift andererseits mit einer Rolle 13 in eine entgegengesetzt dem Schlitz 10 geneigte Schlitzausnehmung 14 ein. Letztere ist in der freien Platte 11a des Plattenpaares 11, 11a angeordnet.

Der Schlitz 10 und die Schlitzausnehmung 14 besitzen an ihren Enden waagrechte Abschnitte, in welche die Rollen 9 und 13 eingreifen, wenn der Schalterwagen 5 in der Trennstellung beziehungsweise in der Betriebsstellung ist. Durch diese Anordnung wird erreicht, daß das aus den Hebeln 8, 12 bestehende Scherengetriebe in den Endlagen der Deckplatten nur durch eine Schubbewegung des Plattenpaares 11, 11a bewegt werden kann, nicht aber durch eine auf die Deckplatten 6 in der jeweils möglichen Bewegungsrichtung ausgeübte Schubkraft. Eine solche Schubkraft wird in den waagrechten Abschnitten des Schlitzes 10 und der Schlitzausnehmung 14 aufgefangen und bleibt mangels eines einen Schub auf das Plattenpaar 11, 11a auslösenden Momentes wirkungslos.

Die mit der Schlitzausnehmung 10 versehene Platte 11 des Plattenpaares 11, 11a ist im dargestellten Beispiel zwischen der Seitenwand 1 und der Platte 11a angeordnet und somit von der Platte 11a verdeckt.

Die Platten 11, 11a des Plattenpaares 11, 11a sind miteinander starr verbunden und ferner in einer ortsfesten Trägerplatte 15 verschiebbar angeordnet. Die Trägerplatte 15 bildet die Führung für das Plattenpaar 11, 11a. Im gezeigten Beispiel tragen die Platten 11, 11a Fahrrollen 16, die in hintereinander angeordnete Führungsschlitze 17 der Trägerplatte 15 eingreifen.

An das Plattenpaar 11, 11a ist ein Zwischenhebel 18 angelenkt. An diesen Zwischenhebel 18 greift ein vom Schalterwagen 5 um einen ortsfesten Drehpunkt 19 auslenkbarer Antriebshebel 20 an.

Wirkungsweise :

Es wird von folgender Ausgangslage ausgegangen :

Der Schalterwagen 5 befindet sich in der Betriebsstellung und die Öffnungen 4a sind, wie in der Zeichnung dargestellt, von den Deckplatten 6 freigegeben.

Wenn der Schalterwagen 5 nunmehr in die Trennstellung zurückgezogen, also im gezeigten Beispiel nach links bewegt wird, greift ein am Schalterwagen 5 angeordneter Zapfen 21 in einen Gleitschlitz 22 des Antriebshebels 20 ein und schwenkt diesen um den Drehpunkt 19. Mit dieser Bewegung wird dem Zwischenhebel 18 ein Schubmoment nach rechts erteilt, durch welches das Plattenpaar 11, 11a nach rechts bewegt wird.

Sobald die Rollen 9, 13 in die geneigten Abschnitte des Schlitzes 10 beziehungsweise der Schlitzausnehmung 14 gelangen, werden die zugeordneten Enden der Hebel 8. 12 um den Drehpunkt 7 zwangsweise gegeneinander bewegt. Damit werden auch die an den Deckplatten 6 angelenkten Enden der Hebel 8, 12 gegeneinander bewegt. Die obere Deckplatte 6 verschiebt sich nach unten und die untere Deckplatte 6 nach oben. Die Verschiebung ist beendet, wenn die beiden Deckplatten 6 aneinanderliegen und die Öffnungen 4a verschließen. In dieser Lage nimmt der Schalterwagen 5 seine Trennstellung ein und die Rollen 9, 13 befinden sich in den linken waagrechten Abschnitten des Schlitzes 10 beziehungsweise der Schlitzausnehmung 14.

Das Freigeben der Öffnungen 4a erfolgt im umgekehrter Weise.

**Patentansprüche**

1. Gekapseltes elektrisches Schaltfeld, mit einer einen Sammelschienenraum oder Kabelanschlußraum (3) von einem Leistungsschalterraum (2) trennenden Schottwand (4), welche für den Durchgriff von Kontaktarmen eines im Leistungsschalterraum (2) aus einer Trennstellung in eine Betriebsstellung fahrbaren Schalterwagens (5) Öffnungen (4a) aufweist, die in der Trennstellung des Schalterwagens (5) durch ein parallel zur Schottwand (4) angeordnetes Paar Deckplatten (6) verschlossen sind, welche in der Verschlußlage aneinanderliegen und durch die Bewegung des Schalterwagens (5) in die Betriebsstellung, unter Freigabe der Öffnungen (4a), über ein sich zwischen ihnen und dem Schalterwagen (5) erstreckendes Hebelgetriebe auseinander bewegbar sind, das an einer Innenseite einer Feldseitenwand (1) einen um einen ortsfesten Drehpunkt (7) schwenkbaren Hebel (8) aufweist, dadurch gekennzeichnet, daß der Hebel (8) zwei Arme besitzt, von denen der eine an einer der Deckplatten (6) angelenkt ist und der andere mit einer Rolle (9) in einen Schlitz (10) einer Platte (11) eines Plattenpaares (11, 11a) eingreift ; daß das Hebelgetriebe ein aus dem Hebel (8) und einem weiteren Hebel (12) bestehendes, zum gegenläufigen Heben und Senken der Deckplatten (6) ausgebildetes Scherengetriebe ist ; daß der weitere Hebel (12) einerseits an der freien Deckplatte (6) angelenkt ist und andererseits mit einer Rolle (13) in eine entgegengesetzt dem Schlitz (10) geneigte, in der freien Platte (11a) des Plattenpaares (11, 11a) angeordnete Schlitzausnehmung (14) eingreift ; daß die Platten des Plattenpaares (11, 11a) miteinander verbunden und in einer ortsfesten Trägerplatte (15) verschiebbar angeordnet sind und daß an das Plattenpaar (11, 11a) ein Zwischenhebel (18) angelenkt ist, an den ein vom Schalterwagen (5) auslenkbarer Antriebshebel (20) angreift.

2. Schaltfeld nach Anspruch 1, dadurch gekennzeichnet, daß der Schlitz (10) und die Schlitzausnehmung (14) an jeden Ende einen waagrechten Abschnitt aufweisen und daß die Rollen (9, 13) des Scherengetriebes in der Betriebsstellung und in der Trennstellung des Schalterwagens (5) in den zugeordneten waagrechten Abschnitt eingreifen.

3. Schaltfeld nach Anspruch 1 und 2, dadurch gekennzeichnet, daß die Platten (11, 11a) Fahrrollen (16) tragen, welche in hintereinanderliegende Führungsschlitze (17) der Trägerplatte (15) eingreifen.

**Claims**

1. Enclosed electrical control panel, having a partition wall (4) separating a bus bar compartment or cable connection compartment (3) from a power switch compartment (2), which (4) comprises apertures (4a) for the penetration of contact arms of an actuator carriage (5) guidable in the power switch compartment from a dividing position into an operating position, which (4a) are covered in the dividing position of the actuator carriage (5) by a pair of cover plates (6) arranged parallel to the partition wall (4), which (6) abut each other in the covering position and can be moved apart by the movement of the actuator carriage (5) into the operating position, revealing the apertures (4a), by means of a lever mechanism extending between them and the actuator carriage (5), which lever mechanism comprises a lever (8) pivotable about a fixed axis (7) on the interior of a panel side wall (1), characterised in that the lever (8) comprises two limbs, of which one is coupled to one of the cover plates (6) and the other engages with a roller (9) into a slot (10) of one plate (11) of a pair of plates (11, 11a) ; in that the lever mechanism is a scissor-type mechanism, consisting of the lever (8) and a second lever (12), and designed for the raising and lowering of the cover plates (6) in opposite directions ; in that the second lever (12) is coupled at one end to the free cover plate (6) and at the other end engages with a roller (13) into a recessed slot (14) inclined in the opposite direction to the slot (10) and arranged in the free plate (11a) of the pair of plates (11, 11a) ; in that the plates of the pair of plates (11, 11a) are connected to each other and are displaceably arranged in a fixed mounting plate (15), and in that there is coupled to the pair of plates (11, 11a) an intermediate lever (18), on to which a drive lever (20) engages which is deflectable by the actuator carriage (5).

2. Control panel according to claim 1, characterised in that the slot (10) and the recessed slot (14) have a horizontal section at each end and in that the rollers (9, 13) of the scissor-type mechanism engage in the operating position and in the dividing position of the actuator carriage (5) into the associated horizontal section.

3. Control panel according to claims 1 and 2, characterised in that the plates (11, 11a) carry guide rollers (16), which engage into guide slots (17) of the mounting plate (15) arranged one behind the other.

### Revendications

1. Cellule de connexion électrique de type blindée comprenant une cloison (4), séparant un compartiment barres omnibus ou un compartiment boîte à câbles (3) d'un compartiment disjoncteur (2), qui présente, pour la traversée de bras de contact d'un chariot à disjoncteur (5) déplaçable dans le compartiment disjoncteur (2) d'une position débranchée à une position de service, des ouvertures (4a) qui sont fermées en position débranchée du chariot à disjoncteur (5) par une paire de volets obturateurs (6) disposés parallèlement à la cloison, qui sont appliqués l'un contre l'autre en position de fermeture et peuvent être écartés l'un de l'autre par le mouvement du chariot à disjoncteur (5) en position de service, en dégageant les ouvertures (4a), par l'intermédiaire d'un mécanisme à leviers situé entre les volets et le chariot à disjoncteur (5) et présentant un levier (8) pivotant sur un point de rotation (7) fixe, caractérisée en ce que le levier (8) possède deux bras, dont l'un est articulé sur l'un des volets d'obturation (6) et l'autre pénètre par un galet (9) dans une fente (10) d'une plaque (11) d'une paire de plaques (11, 11a) ; que le mécanisme à levier est un mécanisme en ciseaux formé du levier (8) et d'un autre levier (12) et conçu pour relever et abaisser les volets d'obturation (6) en sens opposé ; que le levier supplémentaire (12) est articulé d'une part sur le volet d'obturation (6) libre et pénètre d'autre part par un galet (13) dans un évidement en fente (14) ménagé avec une inclinaison contraire à la fente (10) dans la plaque libre (11a) de la paire de plaques (11, 11a) ; que les plaques de la paire de plaques (11, 11a) sont reliées ensemble et sont disposées coulissantes dans une plaque support (15) fixe et qu'un levier intermédiaire (18) attaqué par un levier de commande (20) déplaçable par le chariot à disjoncteur (5) est articulé sur la paire de plaques (11, 11a).

2. Cellule selon la revendication 1, caractérisée en ce que la fente (10) et l'évidement en fente (14) présentent à chaque extrémité un tronçon horizontal et que les galets (9, 13) du mécanisme en ciseaux sont situés dans un tronçon horizontal correspondant lorsque le chariot à disjoncteur (5) est en position de service ou en position débranchée.

3. Cellule selon la revendication 1 ou 2, caractérisée en ce que les plaques (11, 11a) portent des roulettes (16) par lesquelles elles peuvent rouler dans des fentes de guidage (17) formées l'une derrière l'autre dans la plaque support (15).